# EUROPEAN PATENT SPECIFICATION

(11) **EP 3 024 756 B1**
(45) Date of publication and mention of the grant of the patent: **06.09.2017**
(21) Application number: 14777797.3
(22) Date of filing: 25.07.2014
(51) Int. Cl.: B65D 85/804

(54) **CAPSULE FOR BEVERAGES AND RESPECTIVE PRODUCTION APPARATUS AND METHOD**
KAPSEL FÜR GETRÄNKE SOWIE ENTSPRECHENDE HERSTELLUNGSVORRICHTUNG UND -VERFAHREN
CAPSULE POUR BOISSONS, ET APPAREIL ET PROCÉDÉ DE PRODUCTION RESPECTIFS

(30) Priority: 26.07.2013 IT MO20130214
(43) Date of publication of application: 01.06.2016
(73) Proprietor: Sarong Societa' Per Azioni, 42046 Reggiolo (RE) (IT)
(72) Inventor: BARTOLI, Andrea, 42123 Reggio Emilia (IT); CAPITINI, Davide, 42123 Reggio Emilia (IT); GRILLENZONI, Alessandro, 42018 San Martino in Rio (RE) (IT)
(74) Representative: Persi, Patrizia
(86) International application number: PCT/IB2014/063422
(87) International publication number: WO 2015/011683

(56) References cited:
- WO-A1-2012/100977
- WO-A1-2012/118367
- WO-A2-2007/143514
- FR-A3- 2 972 180

## Description

The invention relates to capsules or containers for preparing products, for example beverages, in automatic dispensing machines. In particular, the invention relates to a sealed, single-serving and disposable capsule containing an initial product that is able to make an end product by interacting with pressurised fluid.

The invention further relates to an apparatus for making such a capsule. Known capsules for use on dispensing machines are disposable and single-serving containers comprising an outer casing, made of plastics impermeable to liquids and gases and having a beaker or cup shape. The casing has a bottom wall and a side wall defining an upper opening through which the product can be inserted from which to obtain the beverage. The upper opening is closed hermetically by a covering element, typically a sheet of aluminium of a film of plastics, so as to seal the product inside the container. The covering element is generally fixed to a flange-shaped edge of the casing, peripheral and annular edge, which is opposite the bottom wall and arranged around the upper opening.

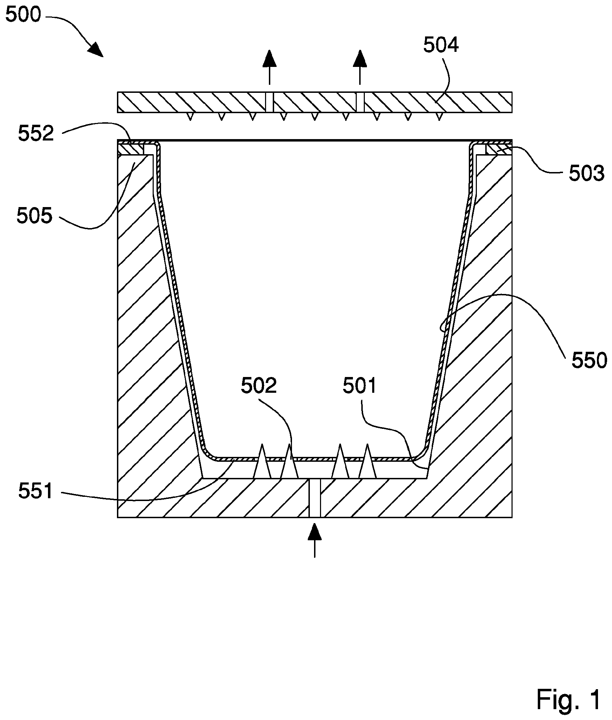

The capsule is pierceable to enable the pressurised liquid, typically water, to be delivered, and the obtained beverage to exit. In particular, the cover and the bottom wall of the casing are pierceable by suitable means of a dispensing machine to enable respectively the pressurised liquid to be delivered from above and the beverage to be extracted from below. As illustrated schematically in figure 1, a dispensing machine 500 of known type comprises a housing 501 arranged for receiving and enclosing a capsule 550. A bottom portion of the housing 501 is provided with perforating means 502 for perforating a bottom wall 551 of the capsule 550 and injecting the pressurised fluid or extracting the beverage therefrom. To prevent, during use, the fluid or the beverage escaping from the housing 501 because of the high operating pressure, sealing means 503 has to be interposed between the capsule 550 and the housing 501.

The sealing means 503 generally comprises an annular washer, made of elastomeric material, interposed between a flange edge 552 of the capsule 550 and an abutting portion 505 of the housing 501. When the capsule 550 is closed in the housing 501, the sealing means 503 is compressed by a perforating element 504, thus ensuring the hydraulic seal. One drawback of this solution lies in the fact that the washer, after being subjected to wear and deterioration with use, comes into contact with the product and/or fluid each time a beverage is dispensed without being able to be properly washed subsequently. From a hygienic point of view this solution is not optimum.

In order to overcome this drawback, capsules are known that include a sealing element made of yieldable, typically elastomeric, material, which, when it is crushed when the capsule is inserted into the dispensing machine, ensures the seal. Such seals can also be used in dispensing machines devoid of sealing means.

FR 2972180 describes a kit for making a capsule comprising a body provided with an annular edge and comprising a protruding element that defines a cavity, that is suitable to create a pressure seal and a reinforcing rib to increase the mechanical resistance of the capsule and prevent a pluralities of bodies to be stacked.

A closing lid 2 provided with an adhesive is also added to the kit, such as the closing lid may close the body to make a capsule.

WO 2007/143514 describes several versions of systems and methods for making plastic containers and different versions of containers obtained by said systems and methods.

WO 2007/143514 discloses a thermoforming apparatus comprising a thermoforming cavity provided with a recess in a lateral side of the cavity, wherein the recess is intended to form a corresponding projection on the thermoformed container. The projection can be intended to form a coupling structure for a corresponding closure member (e.g. cup, lid) for attaching closure members to the container.

Patent EP 1654966 illustrates a capsule for beverages comprising an elastic sealing element fixed to a circumferential edge of the capsule made of elastomeric material, in particular silicone rubber, different from the material used to form the capsule. The elastic element can be fixed to the casing of the capsule at a peripheral edge or a bottom wall of said casing.

A capsule or this type is nevertheless very expensive because it requires the connection to the casing of the capsule of the sealing element in silicone rubber to be made and connected, which is, however, difficult to fix by heat-sealing.

Capsules are also known from patent EP2303077 or from application EP2389326 which comprise a sealing element made of the same material as the casing of the capsule. The sealing element is in this case made as a plurality of concentric circumferential ridges made in the edge of the capsule, which nevertheless require great manufacturing precision by means of injection moulding to ensure an optimum seal when the capsule is inserted into the dispensing machine.

If this precision is not achieved, undesired leaks can occur when pressurised fluid is injected into the capsule and/or fills the housing into which the capsule is inserted.

One object of the present invention is to improve known capsules for beverages, in particular capsules usable in known dispensing machines provided with a housing suitable for containing and sealingly enclosing a capsule.

Another object is to make a capsule that is usable in known dispensing machines that ensures the seal during dispensing without the need for specific sealing means of the housing.

A further object is to obtain a capsule that is cheap and easy to use.

Yet another object is to provide an apparatus for making the capsule having simple and reliable operation and a highly productive manufacturing method.

According to a first aspect of the invention a capsule is provided for beverages according to claim 1 and one or more claims appended thereto.

According to a second aspect of the invention an apparatus is provided for making capsules according to claim 10 and one or more claims appended thereto.

The invention can be better understood and implemented with reference to the attached drawings that illustrate some embodiments thereof by way of non-limiting example, wherein:
Figure 1 is a schematic cross section of a known capsule for beverages associated with a dispensing machine which is also of known type;
Figure 2 is a schematic cross section of a capsule according to the invention associated with a dispensing machine, illustrated schematically;
Figure 3 is a partial frontal view, with some illustrated parts sectioned for clarity, of a capsule according to the invention;
Figure 4 is an enlarged partial schematic cross section of an edge of the capsule of Figure 3;
Figure 5 is an enlarged partial schematic cross section of an edge of an alternative embodiment of the capsule of Figure 3;
Figure 6 is a frontal schematic view of forming means of the forming apparatus of the invention during a preliminary forming step, in which first operating means and second operating means are in a forming position for shaping a sheet material and a punch that is part of the second operating means is in an inactive raised position that is not in contact with the sheet material;
Figure 7 is a frontal schematic view of the forming apparatus of Figure 5 in an initial operative forming step, wherein the punch is in a lowered work position and cooperates with a seat of the first operating means.

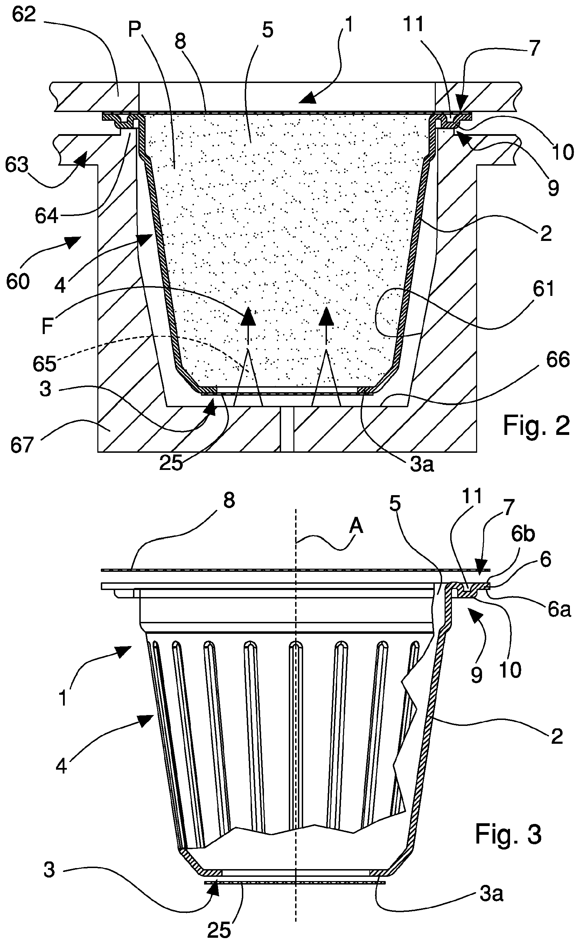

With reference to figure 2 a capsule 1 is illustrated for beverages according to the invention, which is usable in a dispensing machine 60, which is disclosed below, for producing an end product, in particular a hot beverage, for example coffee, barley, herbal tea, tea, chocolate, etc, by injection of a hot pressurised fluid F into the interior thereof. The capsule 1 of the invention comprises an outer casing or container 2, in turn comprising a base wall 3 and a side wall 4 defining a cavity 5 that is open and suitable for containing an initial product P, for example a soluble or percolable food product to be combined with a fluid, typically water, to obtain an end product. The base wall 3 and the side wall 4 define a substantially beaker or cup-shaped body of the capsule 1.

The casing further comprises a flange-shaped edge 7 connected to the side wall 4 and extending therefrom, arranged around the opening of the cavity 5. The edge 7 is further opposite the base wall 3 and faces outwards with respect to the cavity 5.

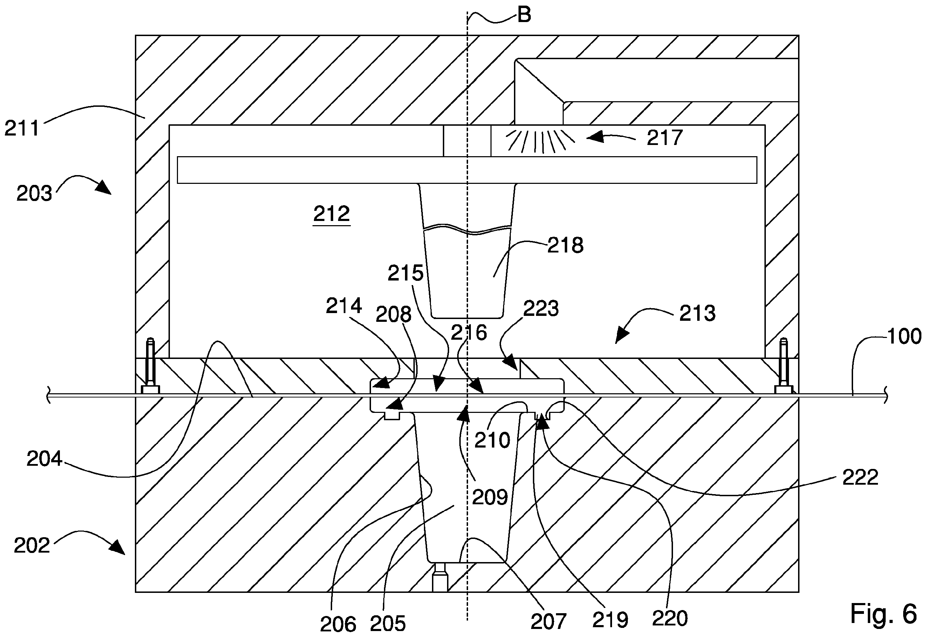

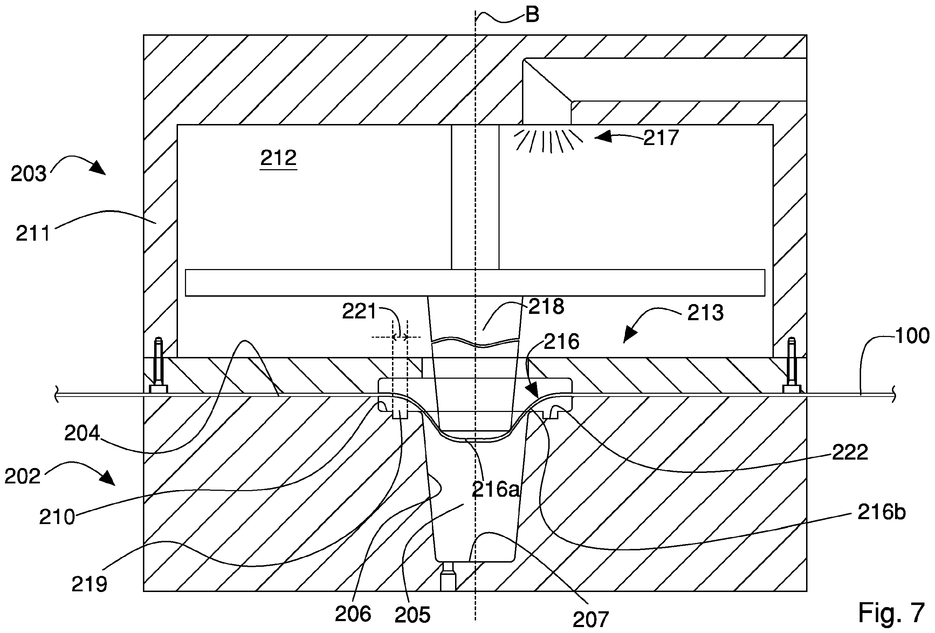

The casing 2 is made by forming a sheet of thermoformable plastics 100 (Figure 6 and Figure 7) that is suitable for the process of preparing the end product starting with the initial product P, which is for example able to withstand without deformation temperatures up to 100°C and pressure up to 5 bar.

This sheet of plastics 100 can have a thickness comprised between 15 micron and 1200 micron, in particular between 15 micron and 700 micron and is made of a polyolefin, for example polypropylene PP and/or polyethylene PE and/or polyamide PA.

In detail, the sheet material can comprise one first layer of material, in particular suitably for contacting and/or conserving the initial product P, for example made of polypropylene PP that is impermeable to humidity, a second layer of material that is not in contact with the initial product P made of material that is impermeable to gas, in particular to oxygen and optionally also to humidity, also known as a barrier layer, and a third layer of outer material.

The barrier layer, interposed between the first and the second layer, ensures complete insulation from the external environment of the cavity 5, in particular if the first layer is permeable over time to oxygen. The barrier layer has a thickness comprised between 2 micron and 100 micron, in particular between 15 micron and 70 micron, and is made for example of ethylene vinyl alcohol (EVOH), which is gas impermeable only to oxygen, or polyvinylidene chloride (PVDC), which is gas impermeable both to oxygen and humidity. According to a first embodiment (not shown) of the sheet material, the first and the third layer are made of the same material, for example polypropylene PP and are coupled with the barrier layer interposed therebetween. Such layers can have the same thickness (for example 350 micron), or different thicknesses (for example the first layer can have a thickness of 500 micron whereas the third layer can have a thickness of 300 micron).

According to a second alternative embodiment (not shown), the first layer is a supporting layer and is made of polypropylene PP, the second layer is the barrier layer (EVOH or PVDC) and the third layer is an extruded layer of polypropylene PP or polyethylene PE, of a thickness equal to 15 micron, which is coupled with the first and the second layer during the process of manufacturing the sheet material.

The sheet material, both according to the first and to the second embodiment, is thus selected in such a manner as to protect over time the initial product P contained in the capsule from humidity and from oxygen.

The capsule further comprises a covering element 8 fixed to the edge 7 of the casing 2 to seal hermetically the capsule 1, i.e. the open cavity 5 and thus conserve the product P. The covering element 8 comprises a sheet of aluminium or a film of plastics provided with a barrier layer that is pierceable by extracting means for extracting the end product of the dispensing machine 60.

The covering element 8 is fixed to the edge 7 of the casing 2 by thermal or ultrasound welding, or gluing. Preferably, the covering element 8 is fixed to the casing by heat-sealing, as will be seen better below.

The base wall 3 of the capsule has further a preferably circular hole bound by a further annular edge 3a extending up to the side wall 4 of the capsule. A further covering element 25, similar to the covering element 8 and pierceable by cutting means and/or injection means of the fluid F of the dispensing machine 60, is fixed to the further edge 3a outside the base wall 3, to close the hole thereof, similarly to what has already been said for the covering element 8.

The thickness of the covering element 8 and/or of the further covering element 25 is expressed in grams and is comprised between 80 and 90 g/square metre.

The edge 7 of the capsule comprises a sealing element 9 that comprises at least one protrusion 10 that is also obtainable by thermoforming that faces the base wall and defines at least one further open cavity 11 that is suitable for containing a fluid, for example air or inert gas.

The covering element 8 is fixed to the edge 7 of the casing 2 to hermetically seal also the further cavity 11, so as to create a cushion that is deformable between the edge 7 and the covering element 8 that defines the sealing element 9.

In addition to the protrusion 10, the edge 7 also has an annular flat end 6.

As illustrated in figure 2, the dispensing machine 60, which is of known type and is not disclosed in detail, comprises a seat or space 61 that is suitable for receiving and containing the capsule 1 and locking means 62 arranged for locking firmly to the inside of the aforesaid space 61 the capsule 1, in an operating configuration.

The dispensing machine 60 further comprises cutting means 65 placed on the bottom 66 of the space 61 and arranged for perforating the base wall 3 of the capsule, in particular the further covering element 25. Injection means of the fluid F (not shown) is suitable for supplying the pressurised fluid F to the seat 61 of the dispensing machine 60. This fluid F is in turn injected inside the cavity 5 of the capsule through the openings made on the base 3 of the capsule by the cutting means 65.

Extracting means (not illustrated) is provided for perforating the covering element 8 so as to enable the end product to exit the capsule 1.

In one condition of use, the flange-shaped edge 7 of the capsule 1 is clamped and compressed between the locking means 62 and a portion 63 of a supporting frame 67 of the dispensing machine 60 in which the space 61 is obtained.

The locking means 62 comprises, for example, an annular plate that acts on the edge 7 of the casing 2.

Abutting means 64 is provided on the supporting portion 63 of the frame 67 and comprises one or more annular ridges that abut on the sealing element 9 of the capsule 1. As the sealing element 9 is a deformable cushion filled with a fluid, for example, air or inert gas, because of the pressure of contact generated by the locking means 62 in the operating configuration, it deforms locally and substantially takes on the shape of the annular ridges of the abutting means 64.

In this manner the sealing element 9 is able to engage sealingly, when compressed, with abutting means 64 of the dispensing machine 60.

This deformation ensures an optimal seal of the edge 7 with the supporting portion 63 of the frame 67, which prevents leaks therefrom of pressurised fluid F or end product during a dispensing operating step.

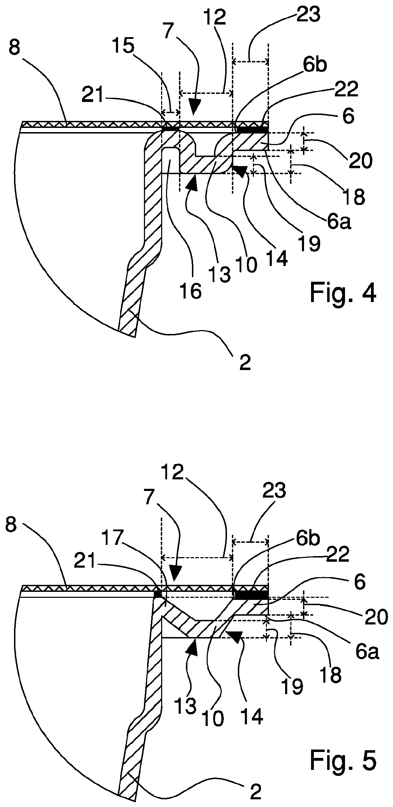

The protrusion 10 that is obtainable by thermoforming is arranged in a first annular circumferential zone 12 (Figure 4) of the edge 7. The protrusion 10 is also beaker or cup-shaped and comprises a respective base wall 13, parallel to the base wall 3 of the capsule 1, and a side wall 14 defining the further open cavity 11.

The first annular zone 12 is created by the overall dimensions of the protrusion 10 into the edge 7 in a radial direction with respect to an axis of symmetry A of the capsule 1, and i.e. as a maximum radial extent of the opening of the further cavity 11.

The sealing element 9 can comprise a single continuous annular protrusion 10 arranged in the first annular zone 12 and in this case the further cavity 11 is annular, circumferential and continuous arranged outside the cavity 5 in a radial direction with respect to the axis of symmetry A.

According to an alternative embodiment not shown, the sealing element 9 comprises a plurality of protrusions 10 arranged in separate portions of the first annular zone 12, which define a plurality of further cavities 11 which are separate and arranged circumferentially in the first annular zone 12.

According to a different alternative embodiment (not shown), the plurality of protrusions 10 are arranged alternatively in separate portions of first annular zone 12 and of a second annular circumferential zone (not shown) of the edge 7, arranged externally the first annular zone 12 in a radial direction with respect to the axis of symmetry A.

The radial extent, i.e. the extent measured in a radial direction, of the first annular zone 12 is selected in such a manner as to enable the capsule 1 to adapt to different models of dispensing machine, abutting on abutting means 64 of the dispensing machine 60 however they are arranged radially in the dispensing machine 60. It is observed that if optionally both the first annular zone 12 and the second annular zone are present because the protrusions 10 are arranged in distinct concentric annular zones, the radial extent measurements that will be provided below are to be deemed to be without loss of scope for a radial extent that includes both the first annular zone 12 and the second annular zone.

As shown in Figure 4, the first annular zone 12 has a radial extent comprised in a range from 1.50 mm to 2.8 mm, in particular preferably in a range comprised between 1.60 mm and 2.50 mm, in particular preferably equal to 1.67 mm.

The first annular zone 12 further has a distance 15 from the side wall 3, measured from the side wall 4 of the capsule 1 to the first annular zone 12 that is less than 1.20 mm, in particular preferably 0.75 mm.

It should be noted that in the capsule 1 shown in Figure 4 the distance 15 is not nil because there is a substantially annular space 16 interposed between the side wall 4 of the capsule and the side wall 14 of the protrusion 10 that spaces the protrusion 10 apart from the side wall 4 of the capsule 1.

According to an alternative embodiment of the capsule shown in Figure 5, the annular space 16 is absent and the distance between the protrusion 10 and the side wall 4 of the capsule 1 is substantially nil inasmuch as the side wall 4 of the capsule and the side wall 14 of the protrusion 10 have a common origin and define together an acute vertex 17 angle.

Also the dimensions of the annular flat end 6 contribute to making the sealing element, as will be seen below. The annular flat end 6 has a radial extent 23 preferably comprised between 1.2mm and 1.5mm, preferably 1.42mm.

Considering on the other hand a measurement along an axis parallel to the axis of symmetry A, the protrusion 10 has a longitudinal extent 18 and thus a height, from a surface 6a of the annular flat end 6 facing the base wall 3 of the capsule 1 to the base wall 13 of the protrusion 10, comprised between 0.6 mm and 0.80 mm. If the base wall 13 of the protrusion 10 is parallel to the base wall 3 of the capsule 1, the longitudinal extent 18 is constant and preferably equal to 0.75mm.

Nevertheless, the protrusion 10 can have a total longitudinal extent that is greater than the longitudinal extent 18, summed to the thickness of the casing 2, if the thermoforming is deeper in certain edge portions 7 than the annular flat end 6 thereof, as, for example, in Figure 5 in which the vertex 17 of the capsule is not aligned on a surface 6b of the annular flat end 6 of the edge 7, opposite the surface 6a.

If a thickness of the casing 2 in the edge 7 is now considered, it has been established experimentally that deformation of the sealing element is effective if in the edge 7 the casing has a thickness comprised in a range from 0.10 mm to 0.60 mm, and in particular if in the protrusion 10 the casing 2 has a first thickness 19 comprised in a range from 0.10 mm to 0.60 mm, in particular preferably comprised in a range from 0.15 to 0.55 mm, in particular still more preferably comprised in a range from 0.15 mm to 0.40 mm, in particular preferably comprised in a range from 0.15 a 0.20 mm; if on the other hand the annular flat end 6 has a second thickness 20 comprised in a range from 0.10 mm to 0.60 mm, in particular preferably in a range from 0.15 mm to 0.55 mm, in particular still more preferably in a range from 0.15 mm to 0.40 mm, in particular preferably in a range from 0.20 mm to 0.25 mm.

The first thickness 19 and the second thickness 20 are suitably selected inasmuch as they have to enable the sealing element 9 to flex and deform when compressed by the abutting means 64 of the dispensing machine 60.

The covering element 8 is joined to the edge 7 of the capsule 1, in particular by heat-sealing, at least along a first 21 and a second 22 annular joining portion respectively inside and outside the first annular zone 12 in a radial direction.

The first joining portion 21 has a radial extent comprised between 0.3mm and 0.6mm, preferably equal to 0.4mm.

The second joining portion 22 has a radial extent comprised between 1mm and 1.8mm, preferably 1.42mm, and extends substantially along the entire flat end 6.

If the capsule 1 comprises protrusions 10 arranged alternatively in separate portions of the first annular zone 12 and of the second annular circumferential zone of the edge 7, beyond the first joining portion 21 and the second joining portion 22 there is a third joining portion, respectively outside the second annular zone in a radial direction and the covering element 8 is joined to the edge 7 of the capsule 1, in particular by heat-sealing, also along the third joining portion.

In this case, the first joining portion 21 and the second joining portion 22 have a radial extent comprised between 0.3mm and 0.6mm, preferably equal to 0.4mm, whereas the third joining portion has a radial extent comprised between 1mm and 1.8mm, preferably 1.42mm inasmuch as it extends over the entire annular flat end 6.

The first joining portion 21 and the second joining portion 22 and optionally the third joining portion, above all when obtained by heat-sealing, have blocking features in the sense that they ensure that the capsule maintains over time the initial product P in ideal conditions during storage but at the same time ensure that the sealing element 9 is maintained unaltered even when the latter flexes and is deformed by the abutting means 64 of the dispensing machine 60. In other words, the joining portions do not yield and maintain the sealing element 8 whole and joined to the casing 2 even when the joining portions are subjected to pressure.

The capsule 1 of the invention thus ensures an optimum seal inside the dispensing machine, during the dispensing step without requiring the use of specific washers associated with the dispensing machine and/or with the capsule.

In this manner optimum hygienic conditions are ensured in the dispensing procedure and moderate capsule production costs, as the capsule can be rapidly and easily obtained by thermoforming of a sheet of plastics. Owing to the presence of the deformable cushion between the edge 7 and the covering element 8 that defines the sealing element 9, the capsule can adapt to different embodiments of abutting means 64 of the dispensing machines 60, without the need to make different shaped edges 7 for each type of model of dispensing machine.

The capsule 1 of the invention is thus able to adapt to different models of dispensing machine 60.

It is added that the deformability of the sealing element 9 is ensured by the type of selected sheet material, which is *per se* deformable, but above all by the thickness of the casing 2 in the edge 7 of the capsule 1, which is obtainable by thermoforming.

In particular, the thickness 19 of the thermoformed casing 2 in the protrusion 10 ensures the deformability of the air cushion and the flexibility thereof and ensures the efficacy of the protrusion 10 as a sealing element 9. Further, in experiments it has been observed that also selecting a suitable thickness 20 in the annular flat end 6 and the radial extent 23 is important because also the annular flat end 6 contributes to making an effective seal.

The annular flat end 6 of the edge 7 is in fact able to become deformed and follow the contour of the abutting means of the dispensing machine over the entire radial extent 23, contributing to preventing undesired losses of liquid.

The simplicity of manufacture of the capsule by thermoforming and the placing of the joined covering element 8 in the first and in the second joining portion 21 and 22 on opposite sides of the protrusion 10 thus ensures that a deformable cushion is made in a simple manner, reducing production costs significantly.

The forming apparatus for making the capsule 1 by forming a thermoformable sheet material 100 comprises forming means of a casing 2 of the capsule shown in Figures 6 and 7, which is associated with a forming station (not shown). The casing 2 comprises a base wall 3, a side wall 4 defining with the base wall 3 a cavity 5 and an edge 7 extending from the side wall 4.

The apparatus can further comprise a plurality of workstations (not shown) arranged upstream or downstream of the forming station, like for example a heating station for heating the sheet material 100 arranged upstream of the forming station to bring the sheet material 100 to high temperatures so as to enable the sheet material 100 to be softened and deformed plastically in the subsequent forming station. Downstream of the forming station there is further a cutting station where a suitable cutting means punches in each casing 2 a hole in a base wall 3 of the capsule, bounded by a further annular edge 3a. A first joining station is provided for joining, in particular by heat-sealing, a covering element 25 to the edge 3a of the base wall 3 with an outer closure of the hole obtained therein. The cutting means further separates the thermoformed casings 2 from the sheet of material 100 from which they have been obtained, and the first joining station can be provided upstream or downstream of the cutting station, to close the base wall 3 of the capsule with thermoformed casings 2 that have already been separated or are still joined to the sheet material 100.

A filling station for filling the cavity 5 of the casing 2 with the product P can be provided upstream or downstream of the cutting station, in the sense that thermoformed casings 2 can be filled (in which clearly the further covering element 25 has already been joined to the base wall 3 to close the hole obtained therein) but still joined to the sheet material 100 or casings 2 can be filled that are cut individually and separated from one another, for example because filling is not performed in line with respect to the forming. A second joining station is further provided for joining, in particular by heat-sealing, a covering element 8 to an edge 7 of the casing 2 at a first joining portion 21, at a second joining portion 22 and optionally at a third joining portion.

The forming means of the casing 2 comprises first operating means 202 and second operating means 203, respectively positioned on opposite sides, for example below and above the sheet material 100 supplied thereto, which are movable along a forming axis between a spaced apart position (not shown) in which the sheet material 100 can be supplied thereto and a forming position, shown in Figures 6 and 7, in which the sheet material 100 is shaped to define the casing 2 of the capsule.

In a known manner, the first operating means 202 is provided with a supporting surface 204 that is substantially flat and configured for supporting, during forming, the sheet material and is provided with a seat 205 provided with side walls 206 and with a bottom wall 207 that are respectively suitable for shaping the base wall 3 and the side wall 4 of the casing 2. The seat 205 is substantially cup-shaped to shape a body of the capsule.

The first operating means 202 further comprises a space 208 communicating with a mouth 209 of the seat 205 and having, in a plan view, greater overall dimensions than the seat 205. The space 208 comprises an abutment wall 210 surrounding the seat 205 which is substantially parallel to and spaced apart from the supporting surface 204. The reason for which the abutment wall 210 is spaced apart from the supporting surface 204 is illustrated below in greater detail.

The first operating means 202 is further provided with conduits (not shown) within which a cooling fluid flows that is suitable for rapidly cooling the sheet material when the latter is deformed in a final forming step inside the seat 205 obtained in the first operating means 202, so as to confer appropriate stiffness features on the body of the capsule 1 after thermoforming.

The second operating means 203 comprises in a known manner a bell 211 bounding a closed space 212 within which the casing of the capsule 1 is formed, when the first operating means 202 and the second operating means 203 are in the forming position. The second operating means 203 further comprises a punch 218 that is movable inside the bell 211 between a raised position in which it is inactive and not in contact with the sheet material (Figure 6) in a preliminary forming step and a lowered work position in which the punch cooperates with the seat 205, intercepting the sheet material 100 to push the sheet material 100 toward the seat 205 (Figure 7) during at least a first forming operating step. In the second operating means 203 plate means 213 is also provided to lock the sheet material against the supporting surface 204 during forming of the capsule 1 and a further space 214 is also provided suitable for defining with the space 208 a chamber 215 bounding a portion 216 to be formed of the sheet material, intercepted by the punch 218 in the first forming step.

The second operating means 203 further comprises means for supplying compressed air 217 to the chamber 215 to press the sheet material 100 in a final forming step (not shown) against the bottom wall 207 and the side wall 206 of the seat 205 and against the abutment wall 210, thus shaping the base wall 3, the side wall 4 and the edge 7 of the casing 2 of the capsule.

To enable this, the plate means 213 is provided with a hole 223 to permit the passage of the punch 218 and of the compressed air into the chamber 215 and towards the first operating means 202.

The first operating means 202 comprises according to the invention at least a further seat 219 also communicating with the space 208 by a respective mouth 220.

The further seat 219 is arranged outwardly the seat 205 in a radial direction with respect to the forming axis B and is suitable for shaping the further cavity 11 in the edge 7 of the casing 2 via the compressed air supplied to the chamber 215 in the final forming step, making the corresponding protrusion 10.

The further seat 219 is obtained in a first annular circumferential section 221 of the abutment wall 210, in a radial direction with respect to the forming axis B, which corresponds in the formed capsule 1 to the first annular circumferential zone 12 of the edge 7, in which the protrusion 10 is arranged. The first annular circumferential section 221 is suitable for shaping in the casing 2 the first annular circumferential zone 12 of the edge 7.

The further seat 219 comprises a respective bottom wall 222, substantially parallel to the bottom wall 207 of the seat 205.

If the further seat 219 is a continuous annular groove arranged in the first annular section 221, the protrusion 10 of the casing 2 and thus of the finished capsule obtainable by the forming means 201 is also one continuous annular protrusion.

If on the other hand the first operating means 202 comprises a plurality of grooves (not shown) arranged in separate portions of the first annular section 221, the capsule 1 obtainable by the forming means 202 and 203 will comprise a plurality of separate protrusions 10.

According to an alternative embodiment of the present invention (not shown), the first operating means 202 can comprise a plurality of grooves arranged alternatively in separate portions of the first annular section 221 and of a second annular section, arranged externally in a radial direction with respect to the first annular section 221 to obtain a casing 2, and thus a capsule, provided with protrusions arranged alternatively along the first annular zone 12 and the second annular zone.

As mentioned previously, the forming apparatus further comprises cutting means for cutting the sheet material after forming, thus obtaining formed casings 2 provided with the edge 7 and with the cup body, made by the base wall 3 and the side wall 4. The cutting means is arranged for cutting the sheet material outside the first annular section 221, at a distance from the first annular section that is such as to make in the finished capsule the annular flat end 6 of the desired dimension.

The forming apparatus further comprises joining means arranged for joining, by heat-sealing, the covering element 8 to the thermoformed casing 2, at a first and at a second joining portion of the joining means (not shown) to obtain a finished capsule provided with a casing 2 joined to the covering element 8 at a first 21 and at a second 22 annular joining portion.

In this manner, the covering element 8 can close hermetically both the cavity 5 and the further cavity 11 and as air is trapped a deformable cushion is made that defines the sealing element 9, which is arranged for being deformed and sealingly engaging, when compressed, with the abutting means 64 of a dispensing machine. Alternatively, and without limiting scope, a fluid other than air such as an inert gas such as nitrogen instead of air can be supplied in a known manner to ensure the wholeness of the product P contained in the capsules.

In order to make the capsule 1 of the invention by means of the apparatus disclosed above, a method is provided for forming a casing 2 of the capsule that comprises in a preliminary forming step arranging in contact in a forming position first operating means 202 and second operating means 203 that are moveable towards and away from one another along a forming axis B and arranging a punch 218 of the second operating means in a raised position in which it is inactive.

The method further provides for supporting a sheet material and shaping a base wall 3 and a side wall 4 of the casing 2 of the capsule by a seat 205 obtained in first operating means 202, providing a space 208 communicating with a mouth 209 of the seat 205 having, in a plan view, greater overall dimensions than the seat 205.

The method further comprises defining a chamber 215 between the space 208 and a further space 214 of second operating means 203 to bound a portion to be formed 216 of the sheet material 100 and locking the material at least in a first forming step in which a punch 218 of the second operating means 203 intercepts the portion to be formed 216, pushing the portion towards the seat 205.

In the first forming step, the punch 218 is in fact lowered that intercepts a central portion 216a of the portion to be formed 216, pushing the central portion 216a against the seat 205 as shown in Figure 7.

It should be noted that the portion to be formed 216 has side portions 216b suspended inside the chamber 215, from the central portion 216a up to a locking point by plate means 213, inasmuch as the abutment wall 210 is spaced apart from the supporting surface 204 in which the sheet material is supported and advanced. The seat 205 and the further seat 219 are in other words lower than the supporting surface 204, considering a vertical forming axis B. Such suspended side portions 216b enable the material to maintain an optimum thermoforming temperature to avoid undesired cooling in contact with the cooled walls of the seat 205, before the moment in which the sheet material has to be shaped into the definitive shape of the casing 2.

Further, the sheet material 100 is in this manner stretched more vertically and this avoids undesired accumulations of plastics, especially at the locking points.

After the punch 218 in the lowered position has intercepted the sheet material, compressed air is supplied to the chamber 215 in a final forming step, to press the sheet material against the seat 205 and against the abutment wall 210 of the space 208 that surrounds the seat 205, thus forming an edge 7 of the casing 2 extending from the side wall 4. As the further seat 219 is also in communication with the space 209 and is arranged outside the seat in a radial direction, also the further cavity11 is formed in the edge 7 of the casing 2 at the same time as the cavity 5 inasmuch as the sheet material in the final forming step is pressed by the compressed air also against the bottom wall 222 and the side walls of the further seat 219.

It should thus be noted that the forming of the casing 2 is terminated owing to the compressed air supplied in the final forming step.

Owing to the suspended side portions 216b, the presence is avoided of zones of the sheet material at a lower temperature than the ideal forming temperature and thus the casing 2, when it is pressed and stabilised by the compressed air against the cooled surfaces of the first operating means 202, takes on a defined and precise final shape without zones of incorrectly shaped material.

After forming, in particular thermoforming, the base wall 3 of the casing is cut and then joined to the further covering element 25 to enable subsequent filling of the cavity 5.

Once the cavity 5 is filled with a dose of initial product P, the casing 2 is closed hermetically by heat-sealing fixing a covering element 8 to an edge 7 of the casing 2, and making the cavity 5 containing the initial product P and the further cavity 11 containing a fluid, air or inert gas.

Owing to the apparatus and to the method of this invention, a sealing element 9 is made simply and cheaply by thermoforming, forming simultaneously a cavity 5 and a further cavity 11 of the edge 7 of the casing 2 by means of the seat 205 and the further seat 219. By further joining the hermetically sealed covering element 8 of the cavity 5 and of the further cavity 11 and simply letting air into the further cavity 11 or supplying a different pressurised fluid thereto as an inert gas, a deformable cushion is made defining the sealing element 9 of the capsule arranged for being deformed and sealingly engaging, when compressed, with abutting means 64 of a dispensing machine.

## Claims

1. Capsule for beverages comprising a casing (2) in turn comprising a base wall (3) and a side wall (4) defining a cavity (5) suitable for containing an initial product (P) to be combined with a fluid (F) to obtain an end product, and further comprising an edge (7) extending from said side wall (4); wherein said capsule further comprises a covering element (8) fixed to said edge (7) to seal hermetically said cavity (5), said covering element (8) being pierceable by extracting means of a dispensing machine (60) wherein said capsule is usable, wherein said casing (2) is made by forming a sheet of thermoformable plastics and that said edge (7) comprises a sealing element (9) comprising at least one protrusion (10) facing said base wall (3) which is arranged in a first annular circumferential zone (12) of said edge (7) and is also obtainable by said forming, said protrusion (10) defining at least one further cavity (11) suitable for containing a fluid, for example air or inert gas, said covering element (8) being fixed to seal hermetically also said further cavity (11) so as to create a cushion that is deformable between said edge (7) and said covering element (8) that defines said sealing element (9) arranged for sealingly engaging, when compressed, with abutting means (64) of a dispensing machine (60), and wherein said covering element (8) is joined to said edge (7) of said capsule (1) by heat-sealing along a first annular joining portion (21) and a second annular joining portion (22) respectively inside and outside said first annular zone (12) in a radial direction.

2. Capsule according to claim 1, wherein said sealing element (9) comprises a single continuous annular protrusion arranged in said first annular zone (12).

3. Capsule according to claim 1, wherein said sealing element (9) comprises a plurality of protrusions arranged in separate portions of said first annular zone (12) or alternately in separate portions of said first annular circumferential zone (12) and of a second annular circumferential zone of said edge, arranged externally in a direction that is radial to said first annular zone (12).

4. Capsule according to any preceding claims, wherein said first annular zone (12) has a radial extent comprised in a range from 1.50 mm to 2.8 mm, in particular preferably in a range comprised between 1.60 mm and 2.50 mm, in particular preferably equal to 1.67 mm.

5. Capsule according to any preceding claims, wherein said first annular zone (12) has a distance (15) from said side wall (4) that is less than 1.20 mm, in particular preferably 0.75 mm.

6. Capsule according to any preceding claim, wherein said protrusion (10) has a longitudinal extent (18) comprised between 0.6 mm and 0.80 mm, said longitudinal extent (18) measured along an axis parallel to a symmetry axis A of the capsule from a surface (6a) of an annular flat end (6) of said edge (7) facing said base wall (3) of said capsule to a base wall (13) of said protrusion (10); and wherein in particular said longitudinal extent (18) is constant and equal to 0.75mm, if said base wall (13) of said protrusion (10) is parallel to said base wall (3) of said capsule (1).

7. Capsule according to any preceding claim, wherein in said edge (7) the casing (2) has a thickness comprised in a range from 0.10 mm to 0.60 mm, and in particular in the protrusion (10) the casing (2) has a first thickness (19) comprised in a range from 0.10 mm to 0.60 mm, in particular preferably comprised in a range from 0.15 to 0.55 mm, in particular still more preferably comprised in a range from 0.15 mm to 0.40 mm, in particular preferably comprised in a range from 0.15 and 0.20 mm; and wherein in the annular flat end (6) the casing (2) has a second thickness (20) comprised in a range from 0.10 mm to 0.60 mm, in particular preferably in a range from 0.15 mm to 0.55 mm, in particular still more preferably in a range from 0.15 mm to 0.40 mm, in particular preferably comprised in a range from 0.20 mm to 0.25 mm, said first thickness (19) and said second thickness (20) being such as to enable said sealing element (9) to flex and be deformed, when compressed, by said abutting means (64) of said dispensing machine (60).

8. Capsule according to any preceding claim, wherein said edge (7) has an annular flat end (6), the radial extent (23) of which is comprised between 1.2 mm and 1.5 mm, preferably 1.42 mm.

9. Capsule according to claim 3, and comprising a third joining portion, respectively outside said second annular zone in said radial direction, said covering element (8) being joined to said edge (7) of said capsule, in particular by heat-sealing, also along said third joining portion.

10. Forming apparatus for making a capsule by forming a sheet of thermoformable plastics (100), wherein said capsule (1) comprises a casing (2), in turn comprising a base wall (3) and a side wall (4) defining a cavity (5) and an edge (7) extending from said side wall (4), said apparatus comprising forming means (202, 203) of said casing (2) comprising: first operating means (202) provided with a supporting surface (204) of said sheet material (100), with a seat (205) that is suitable for shaping said base wall (3) and said side wall (4) of said casing (2) and with a space (208) communicating with a mouth (209) of said seat (205) and having, in a plan view, greater overall dimensions than said seat (205); second operating means (203) comprising plate means (213) comprising a further space (214) suitable for defining with said space (208) a chamber (215) bounding a portion (216) to be formed of said sheet material (100), a punch (218) cooperating with said seat (205) and suitable for intercepting said portion (216) during at least a first forming operating step, wherein said plate means (213) is suitable for locking said sheet material (100) against said supporting surface (204), wherein said second operating means (203) comprises means for supplying compressed air (217) to said chamber (215) to press said sheet material (100) in a final step of said forming against said seat (205) and against an abutment (210) of said space (208) surrounding said seat (205) so as to shape said base wall (3), said side wall (4) and said edge (7) of said casing (2); and wherein said first operating means (202) and said second operating means (203) are movable between a spaced apart position and a forming position along a forming axis (B), **characterised in that** said first operating means (202) further comprises at least one further seat (219) communicating with said space (208) by a respective mouth (220), said further seat (219) being arranged outwardly said seat (205) in a radial direction with respect to a said forming axis (B) and being suitable for shaping a further cavity (11) in said edge (7) of said casing (2) by said compressed air (217) in said final step of said forming, wherein said further seat (219) is obtained in a first annular circumferential section (221) of said abutment wall (210) suitable for forming in said casing (2) a corresponding first annular circumferential zone (12) of said edge (7); said apparatus further comprising joining means for joining, in particular by heat-sealing, after filling said cavity (5) of said capsule of an initial product (P), a covering element (8) to said edge (7) of said casing (2) at least along a first annular joining portion (21) and a second annular joining portion (22) respectively inside and outside said first annular zone (12) in a radial direction so as to complete said capsule and so as to close hermetically said cavity (5) containing said initial product and said further cavity(11), in particular containing a fluid like air or inert gas, to make an air cushion between said edge (7) and said covering element (8) that is suitable for defining a sealing element (9) in said capsule arranged for being deformed and sealingly engaging, when compressed, with abutting means (64) of a dispensing machine (60).

11. Apparatus according to claim 10, wherein said further seat (219) is a continuous annular groove arranged in said first annular section (221).

12. Apparatus according to claim 10, wherein said first operating means (202) comprises a plurality of grooves arranged in separate portions of said first annular section (221) or wherein said first operating means (202) comprises a plurality of grooves arranged alternatively in separate portions of said first annular circumferential section (221) and of a second annular circumferential section of the abutment wall (210), arranged externally in said radial direction with respect to said first annular circumferential section (221).

13. Apparatus according to any one of claims 10 to 12, wherein said seat (205) and said further seat (219) comprise respective bottom walls, said bottom wall (207) of said seat (205) being substantially parallel to said bottom wall (222) of said further seat (219).

14. Apparatus according to any one of claims 10 to 13, wherein said plate means (213) is provided with a hole (223) to enable said compressed air (217) and said punch (218) to go through said chamber (215) towards said first operating means (202).

15. Apparatus according to any one of claims 10 to 14, and further comprising cutting means for cutting said sheet material (100) outside said first annular section (221), wherein said cutting means is arranged downstream of said forming means (202, 203) in an advancing direction of the sheet material (100).

## Patentansprüche

1. Kapsel für Getränke, mit einem Gehäuse (2), das wiederum eine Basiswand (3) und eine Seitenwand (4) aufweist, die einen Hohlraum (5) definieren, der zum Enthalten eines anfänglichen Produktes (P) geeignet ist, das mit einem Fluid (F) zu kombinieren ist, um eine Endprodukt zu erhalten, und weiterhin mit einem Rand (7), der sich von der Seitenwand (4) erstreckt; wobei die Kapsel weiterhin ein Abdeckelement (8) aufweist, das an dem Rand (7) festgelegt ist, um den Hohlraum (5) hermetisch abzudichten, wobei das Abdeckelement (8) durch Extrahiermittel einer Ausgabemaschine (60), in der die Kapsel verwendbar ist, durchstechbar ist, wobei das Gehäuse (2) durch Formen einer Bahn aus thermoformbarem Kunststoff gefertigt ist, und wobei der Rand (7) ein Dichtelement (9) aufweist, das zumindest einen Vorsprung (10) aufweist, der der Basiswand (3) zugewandt ist, und der in einem ersten ringförmigen umfänglichen Bereich (12) des Randes (7) angeordnet und ebenso durch das Formen erhaltbar ist, wobei der Vorsprung (10) zumindest einen weiteren Hohlraum (11) definiert, der zum Enthalten eines Fluides, beispielsweise Luft oder inertes Gas geeignet ist, wobei das Abdeckelement (8) festgelegt ist, um auch den weiteren Hohlraum (11) hermetisch abzudichten, um so ein Kissen, das verformbar ist, zwischen dem Rand (7) und dem Abdeckelement (8) zu erzeugen, das das Dichtelement (9) definiert, das zum dichtenden in Eingriff Kommen, wenn es komprimiert wird, mit Anlagemitteln (64) einer Ausgabemaschine (60) angeordnet ist, und wobei das Abdeckelement (8) an den Rand (7) der Kapsel (1) durch Warmsiegeln entlang eines ersten ringförmigen Fügeabschnitts (21) und eines zweiten ringförmigen Fügeabschnitts (22) in einer radialen Richtung innerhalb beziehungsweise außerhalb des ersten ringförmigen Bereichs (12) gefügt. ist.

2. Kapsel nach Anspruch 1, wobei das Dichtelement (9) einen einzelnen durchgehenden ringförmigen Vorsprung aufweist, der in dem ersten ringförmigen Bereich (12) angeordnet ist.

3. Kapsel nach Anspruch 1, wobei das Dichtelement (9) eine Mehrzahl an Vorsprüngen aufweist, die in getrennten Abschnitten des ersten ringförmigen Bereichs (12) oder abwechselnd in getrennten Abschnitten des ersten ringförmigen umfänglichen Bereichs (12) und eines zweiten ringförmigen umfänglichen Bereichs des Randes angeordnet sind, der in einer Richtung außerhalb angeordnet ist, die radial zu dem ersten ringförmigen Bereich (12) ist.

4. Kapsel nach irgendeinem vorhergehenden Anspruch, wobei der erste ringförmige Bereich (12) eine radiale Erstreckung in einem Bereich von 1,50 mm bis 2,8 mm, insbesondere vorzugsweise in einem Bereich zwischen 1,60 mm und 2,50 mm, aufweist, die insbesondere vorzugsweise 1,67 mm beträgt.

5. Kapsel nach irgendeinem vorhergehenden Anspruch, wobei der erste ringförmige Bereich (12) einen Abstand (15) von der Seitenwand (4) aufweist, der kleiner ist als 1,20 mm, insbesondere vorzugsweise 0,75 mm beträgt.

6. Kapsel nach irgendeinem vorhergehenden Anspruch, wobei der Vorsprung (10) eine Längserstreckung (18) zwischen 0,6 mm und 0,80 mm aufweist, wobei die Längserstreckung (18) entlang einer Achse parallel zu einer Symmetrieachse A der Kapsel von einer Fläche (6a) eines ringförmigen flachen Endes (6) des Randes (7), das der Basiswand (3) der Kapsel zugewandt ist, zu einer Basiswand (13) des Vorsprungs (10) gemessen ist; und wobei insbesondere die Längserstreckung (18) konstant ist und 0,75 mm beträgt, wenn die Basiswand (13) des Vorsprungs (10) parallel zu der Basiswand (3) der Kapsel (1) ist.

7. Kapsel nach irgendeinem vorhergehenden Anspruch, wobei das Gehäuse (2) in dem Rand (7) eine Dicke in einem Bereich von 0,10 mm bis 0,60 mm aufweist, und insbesondere das Gehäuse (2) in dem Vorsprung (10) eine erste Dicke (19) in einem Bereich von 0,10 mm bis 0,60 mm, insbesondere vorzugsweise in einem Bereich von 0,15 bis 0,55 mm, insbesondere noch bevorzugter in einem Bereich von 0,15 mm bis 0,40 mm, insbesondere vorzugsweise in einem Bereich von 0,15 und 0,20 mm aufweist; und wobei das Gehäuse (2) in dem ringförmigen flachen Ende (6) eine zweite Dicke (20) in einem Bereich von 0,10 mm bis 0,60 mm, insbesondere vorzugsweise in einem Bereich von 0,15 mm bis 0,55 mm, insbesondere noch bevorzugter in einem Bereich von 0,15 mm bis 0,40 mm, insbesondere vorzugsweise in einem Bereich von 0,20 mm bis 0,25 mm aufweist, wobei die erste Dicke (19) und die zweite Dicke (20) derart sind, dass das Dichtelement (9) durch die Anlagemittel (64) der Ausgabemaschine (60) sich biegen und verformt werden kann, wenn es komprimiert wird.

8. Kapsel nach irgendeinem vorhergehenden Anspruch, wobei der Rand (7) ein ringförmiges flaches Ende (6) aufweist, dessen Radialerstreckung (23) zwischen 1,2 mm und 1,5 mm liegt, vorzugsweise 1,42 mm beträgt.

9. Kapsel nach Anspruch 3, und mit einem dritten Fügeabschnitt, der respektive in der radialen Richtung außerhalb des zweiten ringförmigen Bereichs liegt, wobei das Abdeckelement (8) an den Rand (7) der Kapsel, insbesondere durch Warmsiegeln, ebenso entlang des dritten Fügeabschnittes gefügt ist.

10. Formungsvorrichtung zum Herstellen einer Kapsel durch Formen einer Bahn von thermoformbarem Kunststoff (100), wobei die Kapsel (1) ein Gehäuse (2) aufweist, das wiederum eine Basiswand (3) und eine Seitenwand (4), die einen Hohlraum (5) definieren, und einen Rand (7) aufweist, der sich von der Seitenwand (4) erstreckt, wobei die Vorrichtung Formungsmittel (202, 203) zum Formen des Gehäuses (2) aufweist, die aufweisen: erste Arbeitsmittel (202), die mit einer Stützfläche (204) zum Stützen des Bahnmaterials (100), mit einer Aufnahme (205), die zum Formgestalten der Basiswand (3) und der Seitenwand (4) des Gehäuses (2) geeignet ist, und mit einem Raum (208) versehen sind, der mit einer Mündung (209) der Aufnahme (205) kommuniziert und in einer Draufsicht größere Gesamtabmessungen als die Aufnahme (205) aufweist; zweite Arbeitsmittel (203), die Plattenmittel (213) aufweisen, die einen weiteren Raum (214) aufweisen, der mit dem Raum (208) zum Definieren einer Kammer (215) geeignet ist, die einen aus dem Bahnmaterial (100) zu formenden Abschnitt (216) begrenzt, wobei ein Stempel (218) mit der Aufnahme (205) zusammenwirkt und zum Abfangen des Abschnittes (216) während zumindest eines ersten Formungsarbeitsschritts geeignet ist, wobei die Plattenmittel (213) zum Verriegeln des Bahnmaterials (100) gegen die Stützfläche (204) geeignet sind, wobei die zweiten Arbeitsmittel (203) Mittel zum Zuführen von Druckluft (217) zu der Kammer (215) aufweisen, um das Bahnmaterial (100) in einem finalen Schritt der Formung gegen die Aufnahme (205) und gegen eine Anlage (210) des Raums (208), der die Aufnahme (205) umgibt, zu drücken, um so die Basiswand (3), die Seitenwand (4) und den Rand (7) des Gehäuses (2) formzugestalten; und wobei die ersten Arbeitsmittel (202) und die zweiten Arbeitsmittel (203) zwischen einer beabstandeten Stellung und einer Formungsstellung entlang einer Formungsachse (B) beweglich sind, **dadurch gekennzeichnet, dass** die ersten Arbeitsmittel (202) weiterhin zumindest eine weitere Aufnahme (219) aufweisen, die mit dem Raum (208) durch eine entsprechende Mündung (220) kommuniziert, wobei die weitere Aufnahme (219) in einer radialen Richtung bezüglich der Formungsachse (B) außerhalb der Aufnahme (205) angeordnet ist und zum Formgestalten eines weiteren Hohlraumes (11) in dem Rand (7) des Gehäuses (2) mittels der Druckluft (217) in dem finalen Schritt der Formung geeignet ist, wobei die weitere Aufnahme (219) in einem ersten ringförmigen umfänglichen Abschnitt (221) der Anlagewand (210) erhalten wird, die zum Formen eines entsprechenden ersten ringförmigen umfänglichen Bereichs (12) des Randes (7) in dem Gehäuse (2) geeignet ist; wobei die Vorrichtung weiterhin Fügemittel zum Fügen, insbesondere durch Warmsiegeln, nach dem Füllen des Hohlraums (5) der Kapsel mit einem anfänglichen Produkt (P), eines Abdeckelements (8) an den Rand (7) des Gehäuses (2) zumindest entlang eines ersten ringförmigen Fügeabschnitts (21) und eines zweiten ringförmigen Fügeabschnitts (22) in einer radialen Richtung innerhalb beziehungsweise außerhalb des ersten ringförmigen Bereichs (12) aufweist, um so die Kapsel zu vervollständigen und um so den Hohlraum (5), der das anfängliche Produkt enthält, und den weiteren Hohlraum (11), der insbesondere ein Fluid wie Luft oder inertes Gas enthält, hermetisch zu schließen, um ein Luftkissen zwischen dem Rand (7) und dem Abdeckelement (8) herzustellen, das zum Definieren eines Dichtelements (9) in der Kapsel geeignet ist, das dazu angeordnet ist, verformt zu werden und, wenn es komprimiert wird, dichtend mit Anlagemitteln (64) einer Ausgabemaschine (60) in Eingriff zu kommen.

11. Vorrichtung nach Anspruch 10, wobei die weitere Aufnahme (219) eine durchgehende ringförmige Nut ist, die in dem ersten ringförmigen Abschnitt (221) angeordnet ist.

12. Vorrichtung nach Anspruch 10, wobei die ersten Arbeitsmittel (202) eine Mehrzahl an Nuten aufweisen, die in separaten Abschnitten des ersten ringförmigen Abschnitts (221) angeordnet sind, oder wobei die ersten Arbeitsmittel (202) eine Mehrzahl an Nuten aufweisen, die abwechselnd in getrennten Abschnitten des ersten ringförmigen umfänglichen Abschnitts (221) und eines zweiten ringförmigen umfänglichen Abschnitts der Anlagewand (210) angeordnet sind, der in der radialen Richtung außerhalb bezüglich des ersten ringförmigen umfänglichen Abschnitt (221) angeordnet ist.

13. Vorrichtung nach irgendeinem der Ansprüche 10 bis 12, wobei die Aufnahme (205) und die weitere Aufnahme (219) jeweilige Bodenwände aufweisen, wobei die Bodenwand (207) der Aufnahme (205) im Wesentlichen parallel zu der Bodenwand (222) der weiteren Aufnahme (219) ist.

14. Vorrichtung nach irgendeinem der Ansprüche 10 bis 13, wobei die Plattenmittel (213) mit einem Loch (223) versehen sind, damit die Druckluft (217) und der Stempel (218) durch die Kammer (215) zu den ersten Arbeitsmitteln (202) hin gehen können.

15. Vorrichtung nach irgendeinem der Ansprüche 10 bis 14, und weiterhin mit Schneidmitteln zum Schneiden des Bahnmaterials (100) außerhalb des ersten ringförmigen Abschnitts (221), wobei die Schneidmittel in einer Vorrückrichtung des Bahnmaterials (100) stromabwärts der Formungsmittel (202, 203) angeordnet sind.

## Revendications

1. Capsule pour boissons comprenant une enveloppe (2) comprenant quant à elle une paroi de base (3) et une paroi latérale (4) définissant une cavité (5) adaptée pour contenir un produit initial (P) à combiner avec un fluide (F) pour obtenir un produit final, et comprenant en outre un bord (7) s'étendant depuis ladite paroi latérale (4) ; dans laquelle ladite capsule comprend en outre un élément couvrant (8) fixé audit bord (7) pour sceller hermétiquement ladite cavité (5), ledit élément couvrant (8) pouvant être percé par un moyen d'extraction d'une machine de distribution (60) dans laquelle ladite capsule est utilisable, dans laquelle ladite enveloppe (2) est réalisée en formant une feuille de plastique thermoformable et ledit bord (7) comprend un élément scellant (9) comprenant au moins une protubérance (10) face à ladite paroi de base (3) qui est agencée dans une première zone circonférentielle annulaire (12) dudit bord (7) et qui peut également être obtenue par ladite formation, ladite protubérance (10) définissant au moins une cavité supplémentaire (11) adaptée pour contenir un fluide, par exemple de l'air ou un gaz inerte, ledit élément couvrant (8) étant fixé pour également sceller hermétiquement ladite cavité supplémentaire (11) de façon à créer un coussin qui est déformable entre ledit bord (7) et ledit élément couvrant (8) qui définit ledit élément scellant (9) agencé pour s'engager de manière étanche, lorsqu'il est comprimé, avec un moyen de butée (64) d'une machine de distribution (60), et dans laquelle ledit élément couvrant (8) est assemblé audit bord (7) de ladite capsule (1) par thermoscellage le long d'une première portion d'assemblage annulaire (21) et d'une deuxième portion d'assemblage annulaire (22) respectivement à l'intérieur et à l'extérieur de ladite première zone annulaire (12) dans une direction radiale.

2. Capsule selon la revendication 1, dans laquelle ledit élément scellant (9) comprend une protubérance annulaire continue unique agencée dans ladite première zone annulaire (12).

3. Capsule selon la revendication 1, dans laquelle ledit élément scellant (9) comprend une pluralité de protubérances agencées dans des portions séparées de ladite première zone annulaire (12) ou en alternance dans des portions séparées de ladite première zone circonférentielle annulaire (12) et d'une seconde zone circonférentielle annulaire dudit bord, agencée en externe dans une direction qui est radiale à ladite première zone annulaire (12).

4. Capsule selon l'une quelconque des revendications précédentes, dans laquelle ladite première zone annulaire (12) a une étendue radiale comprise dans une plage de 1,50 mm à 2,8 mm, en particulier de préférence dans une plage comprise entre 1,60 mm et 2,50 mm, en particulier de préférence égale à 1,67 mm.

5. Capsule selon l'une quelconque des revendications précédentes, dans laquelle ladite première zone annulaire (12) a une distance (15) à partir de ladite paroi latérale (4) qui est inférieure à 1,20 mm, en particulier de préférence 0,75 mm.

6. Capsule selon une quelconque revendication précédente, dans laquelle ladite protubérance (10) a une étendue longitudinale (18) comprise entre 0,6 mm et 0,80 mm, ladite étendue longitudinale (18) étant mesurée le long d'un axe parallèle à un axe de symétrie A de la capsule depuis une surface (6a) d'une extrémité plate annulaire (6) dudit bord (7) face à ladite paroi de base (3) de ladite capsule jusqu'à une paroi de base (13) de ladite protubérance (10) ; et dans laquelle en particulier ladite étendue longitudinale (18) est constante et égale à 0,75 mm, si ladite paroi de base (13) de ladite protubérance (10) est parallèle à ladite paroi de base (3) de ladite capsule (1).

7. Capsule selon une quelconque revendication précédente, dans laquelle dans ledit bord (7), l'enveloppe (2) a une épaisseur comprise dans une plage de 0,10 mm à 0,60 mm, et en particulier dans la protubérance (10), l'enveloppe (2) a une première épaisseur (19) comprise dans une plage de 0,10 mm à 0,60 mm, en particulier de préférence comprise dans une plage de 0,15 à 0,55 mm, en particulier de manière encore davantage préférée comprise dans une plage de 0,15 mm à 0,40 mm, en particulier de préférence comprise dans une plage de 0,15 et 0,20 mm ; et dans laquelle dans l'extrémité plate annulaire (6), l'enveloppe (2) a une seconde épaisseur (20) comprise dans une plage de 0,10 mm à 0,60 mm, en particulier de préférence dans une plage de 0,15 mm à 0,55 mm, en particulier de manière encore davantage préférée dans une plage de 0,15 mm à 0,40 mm, en particulier de préférence comprise dans une plage de 0,20 mm à 0,25 mm, ladite première épaisseur (19) et ladite seconde épaisseur (20) étant telles qu'elles permettent audit élément scellant (9) de fléchir et d'être déformé, lorsqu'il est comprimé, par ledit moyen de butée (64) de ladite machine de distribution (60).

8. Capsule selon une quelconque revendication précédente, dans laquelle ledit bord (7) a une extrémité plate annulaire (6), dont l'étendue radiale (23) est comprise entre 1,2 mm et 1,5 mm, de préférence 1,42 mm.

9. Capsule selon la revendication 3, et comprenant une troisième portion d'assemblage, respectivement à l'extérieur de ladite seconde zone annulaire dans ladite direction radiale, ledit élément couvrant (8) étant assemblé audit bord (7) de ladite capsule, en particulier par thermoscellage, également le long de ladite troisième portion d'assemblage.

10. Appareil de formation pour réaliser une capsule en formant une feuille de plastique thermoformable (100), dans lequel ladite capsule (1) comprend une enveloppe (2), comprenant quant à elle une paroi de base (3) et une paroi latérale (4) définissant une cavité (5) et un bord (7) s'étendant depuis ladite paroi latérale (4), ledit appareil comprenant un moyen de formation (202, 203) de ladite enveloppe (2) comprenant : un premier moyen opérationnel (202) pourvu d'une surface de support (204) dudit matériau de feuille (100), d'une assise (205) qui est adaptée pour conformer ladite paroi de base (3) et ladite paroi latérale (4) de ladite enveloppe (2) et d'un espace (208) communiquant avec un orifice (209) de ladite assise (205) et ayant, dans une vue en plan, des dimensions globales plus grandes que ladite assise (205) ; un second moyen opérationnel (203) comprenant un moyen de plaque (213) comprenant un espace supplémentaire (214) adapté pour définir avec ledit espace (208) une chambre (215) délimitant une portion (216) à former dudit matériau de feuille (100), un poinçon (218) coopérant avec ladite assise (205) et adapté pour intercepter ladite portion (216) pendant au moins une première étape opérationnelle de formation, dans lequel ledit moyen de plaque (213) est adapté pour bloquer ledit matériau de feuille (100) contre ladite surface de support (204), dans lequel ledit second moyen opérationnel (203) comprend un moyen pour alimenter en air comprimé (217) ladite chambre (215) pour presser ledit matériau de feuille (100) dans une étape finale de ladite formation contre ladite assise (205) et contre une butée (210) dudit espace (208) entourant ladite assise (205) de façon à conformer ladite paroi de base (3), ladite paroi latérale (4) et ledit bord (7) de ladite enveloppe (2) ; et dans lequel ledit premier moyen opérationnel (202) et ledit second moyen opérationnel (203) sont mobiles entre une position espacée et une position de formation le long d'un axe de formation (B), **caractérisé en ce que** ledit premier moyen opérationnel (202) comprend en outre au moins une assise supplémentaire (219) communiquant avec ledit espace (208) par un orifice (220) respectif, ladite assise supplémentaire (219) étant agencée vers l'extérieur de ladite assise (205) dans une direction radiale par rapport à un dit axe de formation (B) et étant adaptée pour conformer une cavité supplémentaire (11) dans ledit bord (7) de ladite enveloppe (2) par ledit air comprimé (217) dans ladite étape finale de ladite formation, dans lequel ladite assise supplémentaire (219) est obtenue dans une première section circonférentielle annulaire (221) de ladite paroi de butée (210) adaptée pour former dans ladite enveloppe (2) une première zone circonférentielle annulaire (12) correspondante dudit bord (7) ; ledit appareil comprenant en outre un moyen d'assemblage pour assembler, en particulier par thermoscellage, après remplissage de ladite cavité (5) de ladite capsule d'un produit initial (P), un élément couvrant (8) sur ledit bord (7) de ladite enveloppe (2) au moins le long d'une première portion d'assemblage annulaire (21) et d'une deuxième portion d'assemblage annulaire (22) respectivement à l'intérieur et à l'extérieur de ladite première zone annulaire (12) dans une direction radiale de façon à compléter ladite capsule et de façon à fermer hermétiquement ladite cavité (5) contenant ledit produit initial et ladite cavité supplémentaire (11), en particulier contenant un fluide comme de l'air ou un gaz inerte, pour réaliser un coussin d'air entre ledit bord (7) et ledit élément couvrant (8) qui est adapté pour définir un élément scellant (9) dans ladite capsule agencé pour être déformé et s'engageant de manière étanche, lorsqu'il est comprimé, avec un moyen de butée (64) d'une machine de distribution (60).

11. Appareil selon la revendication 10, dans lequel ladite assise supplémentaire (219) est une gorge annulaire continue agencée dans ladite première section annulaire (221).

12. Appareil selon la revendication 10, dans lequel ledit premier moyen opérationnel (202) comprend une pluralité de gorges agencées dans des portions séparées de ladite première section annulaire (221) ou dans lequel ledit premier moyen opérationnel (202) comprend une pluralité de gorges agencées en alternance dans des portions séparées de ladite première section circonférentielle annulaire (221) et d'une seconde section circonférentielle annulaire de la paroi de butée (210), agencée en externe dans ladite direction radiale par rapport à ladite première section circonférentielle annulaire (221).

13. Appareil selon l'une quelconque des revendications 10 à 12, dans lequel ladite assise (205) et ladite assise supplémentaire (219) comprennent des parois de fond respectives, ladite paroi de fond (207) de ladite assise (205) étant sensiblement parallèle à ladite paroi de fond (222) de ladite assise supplémentaire (219).

14. Appareil selon l'une quelconque des revendications 10 à 13, dans lequel ledit moyen de plaque (213) est pourvu d'un trou (223) pour permettre audit air comprimé (217) et audit poinçon (218) de traverser ladite chambre (215) vers ledit premier moyen opérationnel (202).

15. Appareil selon l'une quelconque des revendications 10 à 14, et comprenant en outre un moyen de découpe pour découper ledit matériau de feuille (100) à l'extérieur de ladite première section annulaire (221), dans lequel ledit moyen de découpe est agencé en aval dudit moyen de formation (202, 203) dans une direction d'avancée du matériau de feuille (100).
